(19) Europäisches Patentamt
European Patent Office
Office européen des brevets

(11) **EP 2 420 412 B1**

(12) # EUROPÄISCHE PATENTSCHRIFT

(45) Veröffentlichungstag und Bekanntmachung des Hinweises auf die Patenterteilung:
**31.07.2013 Patentblatt 2013/31**

(21) Anmeldenummer: **11177624.1**

(22) Anmeldetag: **16.08.2011**

(51) Int Cl.:
***B60R 13/08*** (2006.01)
***F16F 7/00*** (2006.01)
***C09D 133/06*** (2006.01)
***C08F 220/10*** (2006.01)
***C08F 2/20*** (2006.01)
***B61D 17/18*** (2006.01)
***C08K 3/00*** (2006.01)
***G10K 11/16*** (2006.01)
***C08F 2/22*** (2006.01)
***C08F 283/00*** (2006.01)

(54) **Antidröhnmasse mit Emulsionspolymerisat und fluorierter Verbindung**

Sound-absorbing mass with emulsion polymerisate and fluorinated compound

Couche de protection anti-rouille dotée d'un polymère en émulsion et d'un composé fluoré

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2010 EP 10173414**

(43) Veröffentlichungstag der Anmeldung:
**22.02.2012 Patentblatt 2012/08**

(73) Patentinhaber: **BASF SE**
**67056 Ludwigshafen (DE)**

(72) Erfinder:
- **Fonseca, Gledison**
  **68161 Mannheim (DE)**
- **Wulff, Dirk**
  **67105 Schifferstadt (DE)**
- **Weiss, Axel**
  **67346 Speyer (DE)**

(56) Entgegenhaltungen:
**WO-A1-01/81264** **DE-U1-202010 001 353**
**JP-A- 4 076 030**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 420 412 B1

Printed by Jouve, 75001 PARIS (FR)

## Beschreibung

Die Erfindung betrifft eine Antidröhnmasse, enthaltend eine Polymerdispersion, enthaltend (a) mindestens ein durch Emulsionspolymerisation von radikalisch polymerisierbaren Monomeren erhältliches, in Wasser dispergiertes Polymer mit einer Glasübergangstemperatur im Bereich von -60 bis +60°C; (b) anorganische Füllstoffe; und (c) mindestens eine fluorierte Verbindung, ausgewählt aus perfluoralkyl-substituierten Carbonsäuren und deren Salzen, perfluoralkyl-substituierten Carbonsäureharzen oder deren Salze, oberflächenaktiven, fluoraliphatischen polymeren Estern und fluorhaltigen Copolymeren auf Acrylatbasis. Die Erfindung betrifft auch ein Verfahren zur Dämpfung von Vibrationen oder Schwingungen von Bauteilen von Fahrzeugen und Maschinen.

Durch Vibration oder Schwingungen von Bauteilen von Maschinen oder Fahrzeugen werden unerwünschte Geräusche erzeugt. Zur Geräuschminderung können die Bauteile mit sogenannten Antidröhnmassen, auch LASD-Massen (Liquid Applied Sound Damping) genannt, versehen werden. Schwingungsdämpfende Materialien sind beispielsweise beschrieben in Journal of Materials Science 36 (2001) 5733-5737, US 2004/0033354. DE 202010001353 U1 und US 6502821. Die Ausrüstung von geometrisch komplexen, dreidimensionalen Bauteilen kann durch Aufsprühen einer Antidröhnmasse in Form einer wässrigen Dispersion erfolgen. Derartige Dispersionen enthalten in der Regel ein dispergiertes, viskoelastisches Polymer und anorganische Füllstoffe. Schwingungsdämpfende Zusammensetzungen auf Basis von wasserbasierten Polymerdispersionen und anorganischen Füllstoffen sowie weiterer Hilfsstoffe sind bekannt aus der EP 1520865 und der WO 2007/034933. Nachteilig bei bisherigen Antidröhnmassen auf Basis von wässrigen Polymerdispersionen ist, dass die damit hergestellten Beschichtungen auf Bauteilen bei Regen oder hoher Luftfeuchtigkeit Wasser aufnehmen können, was zu unerwünschter Korrosion oder Fäulnis führen kann. Es werden deshalb Antidröhnmasse gewünscht, mit denen Beschichtungen herstellbar sind, die unter Feuchtigkeitseinfluss eine möglichst geringe Wasseraufnahme bewirken. Aufgabe der vorliegenden Erfindung war es, derartige Antidröhnmassen zur Verfügung zu stellen.

Es wurde gefunden, dass das Wasseraufnahmeverhalten verbessert werden kann durch bestimmte fluorierte Additive. Gegenstand der Erfindung ist daher eine Antidröhnmasse, enthaltend

(a) eine Polymerdispersion, enthaltend mindestens ein durch Emulsionspolymerisation von radikalisch polymerisierbaren Monomeren erhältliches, in Wasser dispergiertes Polymer mit einer Glasübergangstemperatur im Bereich von -60 bis +60°C;
(b) anorganische Füllstoffe; und
(c) mindestens eine fluorierte Verbindung, die ausgewählt ist aus der Gruppe, die aus perfluoralkyl-substituierten Carbonsäuren und deren Salzen, perfluoralkyl-substituierten Carbonsäureharzen oder deren Salze, oberflächenaktiven, fluoraliphatischen polymeren Estern, und fluorhaltigen Copolymeren auf Acrylatbasis besteht.

Eine bevorzugte Verwendung der erfindungsgemäßen Antidröhnmasse ist die Verwendung zur Schwingungsdämpfung von Karosserieteilen eines Fahrzeugs.

Erfindungsgemäß kommen zur Reduzierung des Wasseraufnahmevermögens von Antidröhnmassen perfluoralkyl-substituierte Carbonsäuren und deren Salze, perfluoralkyl-substituierte Carbonsäureharze oder deren Salze, oberflächenaktive fluoraliphatische polymere Ester und fluorhaltige Copolymere auf Acrylatbasis zum Einsatz.

Wenn im Folgenden von Säuren die Rede ist, gilt stets dasselbe auch für deren Salze. Die fluorierten Verbindungen sind in der erfindungsgemäßen Antidröhnmasse vorzugsweise in einer Menge von 0,1 bis 3 Gew.-% oder von 0,1 bis 2 Gew.-%, insbesondere von 0,2 bis 0,5 Gew.-% enthalten.

Bevorzugte perfluoralkyl-substituierte Carbonsäuren und deren Salze weisen mindestens eine oder zwei Perfluoralkylgruppen der Formel $-C_nCF_{2n+1}$ auf, wobei die Perfluoralkylgruppen linear oder verzweigt, vorzugsweise linear sind, n eine Zahl von 1 bis 16, vorzugsweise 4 bis 14 oder 6 bis 12 bedeutet und die Salze ausgewählt sind aus Ammoniumsalzen, Alkalimetallsalzen und Erdalkalimetallsalzen. Geeignete perfluoralkyl-Substituierte Carbonsäuresalze sind z.B. Lodyne® 2010 und Lodyne® 2000.

Geeignet sind Insbesondere auch Gemische von Verbindungen mit unterschiedlichen Perfluoralkylgruppen, z.B. eine Mischung aus

1 - 15 Gew. % an Verbindungen mit n = 6,
25 - 70 Gew. % an Verbindungen mit n = 8,
15 - 50 Gew. % an Verbindungen mit n = 10 und
5 - 20 Gew. % an Verbindungen mit n = = 12.

Liegen die fluorierten Verbindungen in Form von Carbonsäuresalzen vor, ist das zum Ladungsausgleich erforderliche Kation bevorzugt Ammonium, ein Alkalimetall, bevorzugt Lithium, Natrium, Kalium, oder ein Erdalkalimetall, bevorzugt Magnesium, Calcium, oder Aluminium.

Geeignete perfluoralkyl-substituierte Carbonsäuren sind auch perfluoralkyl-substituierte Monoaminomonocarbonsäuren, insbesondere N,N-Di-perfluoralkyl-substituierte Monoaminomonocarbonsäuren. Die erfindungsgemäßen N, N-di-perfluoralkyl-substituierten Monoaminomonocarbonsäuren und die perfluoralkyl-substituierten Carbonsäuren werden entweder als Verbindungen mit definiertem Molekulargewicht oder als Gemisch von Verbindungen mit unterschiedlichen Molekulargewichten oder als Gemisch von Verbindungen verschiedenen Strukturtyps verwendet Ferner können die N,N-di-perfluoralkyl-substituierten Monoaminomonocarbonsäuren und die perfluoralkyl-substituierten Carbonsäuren auch in polymerisierter Form vorliegen. Weitere Substanzklassen, die erfindungsgemäß zur Verringerung des Wasseraufnahmevermögens von Antidröhnmassen eingesetzt werden, sind oberflächenaktive fluoraliphatische polymere Ester und fluorhaltige Copolymere auf Acrylatbasis. Die Antidröhnmasse enthält mindestens eine Verbindung aus mindestens einer der Substanzklassen perfluoralkyl-substituierte Carbonsäuren, perfluoralkyl-substituierte Carbonsäureharze oder deren Salze, oberflächenaktive fluoraliphatische polymere Ester und fluorhaltige Copolymere auf Acrylatbasis.

Bei den erfindungsgemäßen Polymerdispersionen handelt es sich um Dispersionen von Polymeren in wässrigem Medium. Hierbei kann es sich z.B. ausschließlich um Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%. insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 250 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 -1039) bestimmt werden. Der pH-Wert der Polymerdispersion wird vorzugsweise auf pH größer 4 insbesondere auf einen pH-Wert zwischen 5 und 9 eingestellt.

Bei den durch Emulsionspolymerisation hergestellten Polymeren handelt es sich um Polymere, die durch radikalische Polymerisation von ethylenisch ungesättigten Verbindungen (Monomeren) erhältlich sind, z.B. Acrylat-Homopolymere, Acrylat-Copolymere oder Acrylat-Polymer-Blends. Das Polymer besteht vorzugsweise zu mindestens 40 Gew.% oder zu mindestens 60 Gew.%, oder zu mindestens 80 Gew.%, besonders bevorzugt zu mindestens 90 Gew. % oder zu 100 Gew.% aus einem oder mehreren der nachfolgend beschriebenen Hauptmonomeren. Die Hauptmonomeren sind vorzugsweise ausgewählt aus C1 bis C20 Alkyl(meth)acrylaten, Vinylestem von bis zu 20 C-Atome enthaltenden Carbonsäuren, Vinylaromaten mit bis zu 20 C-Atomen, ethylenisch ungesättigten Nitrilen, Vinylhalogeniden, Vinylethem von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Art und Menge der Monomeren sind vorzugsweise derart, dass die Glasübergangstemperatur mindestens eines durch Emulsionspolymerisation hergestellten Polymers im Bereich von -60 °C bis kleiner oder gleich +60 °C liegt, besonders bevorzugt im Bereich von -30 bis +60 °C oder von -20 bis +55°C. Die Glasübergangstemperatur lässt sich bestimmen durch Differential Scanning Calorimetrie (ASTM D 3418-08, sog. "midpoint temperature").

Geeignete Monomere sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesonde-re sind auch Mischungen der (Meth) acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind z.B. Butadien, Isopren und Chloropren.

Als Hauptmonomere bevorzugt sind $C_1$- bis $C_{10}$-Alkylacrylate und $C_1$- bis $C_{10}$-Alkylmethacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat und 2-Ethylhexylacrylat, 2-Propylheptylacrylat, Styrol sowie Mischungen dieser Monomere. Insbesondere sind die Polymere zu mindestens 60 Gew.%, besonders bevorzugt zu mindestens 80 Gew.% und ganz besonders bevorzugt zu mindestens 90 oder zu mindestens 95 Gew.% aus $C_1$ bis $C_{10}$ Alkyl(meth)acrylaten aufgebaut.

Neben den Hauptmonomeren kann das Polymer weitere Monomere enthalten, z.B. ethylenisch ungesättigte Monomere mit Carbonsäure-, Sulfonsäure- oder Phosphonsäuregruppen (Säuremonomere). Bevorzugt sind Carbonsäuregruppen. In einer Ausführungsform werden Säuremonomere zu mindestens 0,1 Gew.%, vorzugsweise von 0,1 bis 10 Gew.%, oder von 0,5 bis 8 Gew.%, oder von 1 bis 6 Gew.%, bezogen auf das Polymer eingesetzt. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha, beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure. Die Säuregruppen enthaltenden Monomeren können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Weitere Monomere sind z.B. auch Hydroxylgruppen enthaltende Monomere, insbesondere $C_1$-$C_{10}$-Hydroxyalkyl(meth)acrylate oder (Meth)acrylamid. Als weitere Monomere seien darüber hinaus Phenyloxyethylglykolmono-(meth) acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. Als weitere Monomere seien auch vernetzende Monomere genannt.

Insbesondere ist das Polymer zu mindestens 60 Gew.-%, besonders bevorzugt zu mindestens 80 Gew.-%, z.B. von 60 bis 100 Gew.%, und ganz besonders bevorzugt zu mindestens 95 Gew.-% oder zu 100 Gew.% aus mindestens einem $C_1$ bis $C_{20}$ Alkylacrylat, mindestens einem C, bis $C_{20}$ Alkylmethacrylat, deren Gemisch oder deren Gemisch mit Styrol aufgebaut.

Die Herstellung mindestens eines Polymers kann durch Emulsionspolymerisation erfolgen, es handelt sich dann um ein Emulsionspolymerisat. Bei der Emulsionspolymerisation werden in der Regel ionische und/oder nichtionische Emulgatoren und/oder Schutzkolloide bzw. Stabilisatoren als grenzflächenaktive Verbindungen verwendet um die Dispergierung der Monomeren in dem wässrigen Medium zu unterstützen. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Ernulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifeisfall an Hand weniger Vorversuche überprüft werden kann. Vorzugsweise werden anionische und nichtionische Emulgatoren als grenzflächenaktive Substanzen verwendet. Geeignete Emulgatoren sind beispielsweise ethoxylierte $C_8$- bis $C_{86}$- oder $C_{12}$- bis $C_{18}$-Fettalkohole mit einem Ethoxylierungsgrad von 3 bis 50 oder von 4 bis 30, ethoxylierte Mono-, Di- und Tri- $C_4$-bis $C_{12}$- oder $C_4$- bis $C_8$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsurfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationaktive Emulgatoren sind z.B. Verbindungen mit mindestens einer Amino- oder Ammoniumgruppe und mindestens einer C8-C22-Alkylgruppe.

Weitere geeignete Emulgatoren sind Verbindungen der allgemeinen Formel

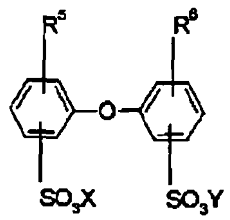

worin $R^5$ und $R^8$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® N PS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130, vorzugsweise 50 bis 90 °C.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Emulsionspolymerisation kann in Gegenwart mindestens eines Schutzkolloids durchgeführt. Das bedeutet, dass die Schutzkolloide vorgelegt oder zusammen mit Monomeren dem Polymerisationsgefäß zugeführt werden. Sie werden vorzugsweise bei der Emulsionspolymerisation vorgelegt, während gegebenenfalls zusätzlich eingesetzte Emulgatoren zusammen mit den Monomeren auch im Laufe der Polymerisation zugeführt werden können.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Molekulargewichtsregler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Thioglycolsäureester, z.B. 2-Ethylhexylthioglycolat, Mercaptoethanol, Mercaptopropyltrimethoxysilan, n-Dodecylmercaptan oder tert.-Dodecylmercaptan. Weiterhin können Regler ohne Thiolgruppe verwendet werden, wie z.B. C6- bis C20-Kohlenwasserstoffe, welche bei Wasserstoffabstraktion ein Pentadienylradikal bilden, z.B. Terpinolen. In einer bevorzugten Ausführungsform ist das Emulsionspolymerisat hergestellt unter Verwendung von 0,05 bis 0,5 Gew.%, bezogen auf die Monomermenge, an mindestens einem Molekulargewichtsregler.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi-oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

In einer bevorzugten Ausführungsform weist das Polymer eine Kern-Schale Morphologie auf oder ist durch mindestens zweistufige Polymerisation herstellbar, wobei die Glasübergangstemperatur des den Kern bildenden Polymers (A) um mindestens 10°C, vorzugsweise um mindestens 15°C oder mindestens 20 °C, z.B. um 10 bis 50°C verschieden ist von der Glasübergangstemperatur des die Schale bildenden Polymers (B), bzw. wobei die Glasübergangstemperatur des bei der ersten Polymerisationsstufe entstehenden Polymers (B) von der Glasübergangstemperatur

des bei der zweiten Polymerisationsstufe (A) entstehenden Polymers um mindestens 10°C, vorzugsweise um mindestens 15°C oder mindestens 20 °C, z.B. um 10 bis 50°C verschieden ist. Diese Ausführungsform betrifft also wässrige Polymerdispersionen, worin die Polymerteilchen mindestens zwei voneinander verschiedene Polymerphasen (A) und (B) mit unterschiedlichen Glasübergangstemperaturen aufweisen. Dies hat den Vorteil, dass damit hergestellte Antidröhnmassen in einem größeren Temperaturbereich schwingungsdämpfende Wirkungen besitzen. Vorzugsweise ist die Glasübergangstemperatur des Kerns größer als die Glasübergangstemperatur der Schale.

Bei den Kern-Schale-Partikeln ist die Oberfläche des Kerns ganz oder mindestens teilweise mit den die Schale bildenden Polymeren bedeckt. Kern-Schale-Partikel haben vorzugsweise einen durchschnittlichen Teilchendurchmesser von 10 nm bis 1 Mikrometer oder von 20 nm bis 500 nm, messbar mit einem dynamischen Lichtstreuungsphotometer. Sowohl bei Polymer (A) als auch bei dem davon verschiedenen Polymer (B) handelt es sich vorzugsweise um Acrylatcopolymere, wobei Art und Menge der Monomeren so sind, dass die Mindestdifferenz der Glasübergangstemperaturen gewährleistet ist. Geeignete Acrylatcopolymere zur Bildung von mindestens zweiphasigen Polymerteilchen sind z.B. beschrieben in WO 2007/034933, EP 1520865 und

DE19954619.

Polymerdispersionen mit mindestens zweiphasigen Polymerteilchen sind vorzugsweise erhältlich durch radikalische wässrige Emulsionspolymerisation umfassend die folgenden Schritte:

a) Polymerisation einer ersten Monomercharge M1 zu einem Polymer P1 mit einer theoretischen Glasübergangstemperatur Tg(1) (nach Fox) und
b) Polymerisation einer zweiten Monomercharge M2 zu einem Polymer P2 mit einer von Tg(1) verschiedenen, theoretischen Glasübergangstemperatur Tg(2) (nach Fox) in der wässrigen Dispersion des Polymeren P1,

wobei vorzugsweise entweder bei der Polymerisation der Monomercharge M1 oder bei der Polymerisation der Monomercharge M2 wenigstens ein Kettenübertragungsreagenz eingesetzt wird.

Unter einer theoretischen Glasübergangstemperatur versteht man hier und im Folgenden die nach Fox aufgrund der Monomerzusammensetzung der Monomercharge M1 bzw. der Monomercharge M2 berechnete Glasübergangstemperatur Tg(1) bzw. Tg(2). Nach Fox (T.G. Fox, Bull. Am. Phys. Soc. (Ser. II) 1, 123 [1956] und Ullmann's Enzyklopädie der technischen Chemie, Weinheim (1980), S. 17, 18) gilt für die Glasübergangstemperatur von Mischpolymerisaten bei großen Molmassen in guter Näherung

$$1/Tg = x1/Tg(1) + x2/Tg(2) + ... + xn/Tg(n)$$

wobei x1, x2, ... xn die Massenbrüche 1, 2, ..., n und Tg(1), Tg(2), ..., Tg(n) die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Erfindungsgemäß bevorzugt wird die Monomercharge M2 so gewählt, dass die theoretische Glasübergangstemperatur (nach Fox) der resultierenden Polymerphase P2 oberhalb der theoretischen Glasübergangstemperatur des zuerst hergestellten Polymeren P1 liegt. Bevorzugt weist dann die Monomercharge M2 eine Zusammensetzung auf, die zu einer theoretischen Glasübergangstemperatur Tg(2) der Polymerphase P2 führt, die oberhalb 30 °C, vorzugsweise oberhalb 40 °C und insbesondere im Bereich von 50 bis 120 °C liegt. Die Monomercharge M1 1 weist für den Fall, dass Tg(2) größer als Tg(1) ist, vorzugsweise eine Monomerzusammensetzung auf, die zu einer theoretischen Glasübergangstemperatur Tg(1) der resultierenden Polymerphase P1 führt, die im Bereich von -40 bis +40 °C, vorzugsweise im Bereich von -30 bis +30 °C und ganz besonders bevorzugt im Bereich von -10 bis +25 °C liegt. Sofern Tg(1) größer als Tg(2) ist, gilt für die bevorzugten Glasübergangstemperaturen der Polymerphase P1 das zuvor für P2 im Falle von Tg(2) größer Tg(1) gesagte. Für die Glasübergangstemperaturen der Polymerphase P2 gilt dann entsprechend das zuvor für Tg(1) gesagte.

In den erfindungsgemäßen Polymerdispersionen liegt das Gewichtsverhältnis der Polymerphasen zueinander im Bereich von 20 : 1 bis 1 : 20, vorzugsweise 9 : 1 bis 1 : 9. Erfindungsgemäß werden solche Polymerdispersionen bevorzugt, worin der Anteil an Polymerphase mit der niedrigen Glasübergangstemperatur überwiegt. Sofern P1, wie erfindungsgemäß bevorzugt, die niedrigere Glasübergangstemperatur aufweist, liegt das Verhältnis P1 : P2 insbesondere im Bereich von 1 : 1 bis 5 : 1 und besonders bevorzugt im Bereich von 2 : 1 bis 4 : 1. Die Gewichtsverhältnisse der Polymerphasen P1 und P2 entsprechen dabei näherungsweise den Mengenverhältnissen der Monomerchargen M1 1 und M2. Im Falle von Tg(1) größer Tg(2) liegen die Mengenverhältnisse P1 : P2 insbesondere im Bereich von 1 : 1 bis 1 : 5 und besonders bevorzugt im Bereich von 1 : 2 bis 1 : 4.

Die erfindungsgemäße Antidröhnmasse enthält vorzugsweise

(a) 5 bis 20 Gew.%, vorzugsweise 10 bis 18 Gew.% Feststoff der Polymerdispersion,
(b) 40 bis 90 Gew.%, vorzugsweise 60 bis 80 Gew.% anorganische Füllstoffe,
(c) 0,1 bis 3 Gew.%, vorzugsweise 0,1 bis 0,5 Gew.% fluorierte Verbindungen,
(c) 10 bis 40 Gew.%, vorzugsweise 20 bis 30 Gew.% Wasser und
(d) 0 bis 10 Gew.%, vorzugsweise 0,1 bis 1 Gew.% Hilfsstoffe.

Geeignete anorganische Füllstoffe sind z.B. Calciumcarbonat, Kaolin, Mica, Silica, Kreide, Mikrodolomit, Quarzmehl, Talk, Ton, Bariumsulfat, Tonerde, Eisenoxid, Titandioxid, Glaspulver, Glasschuppen, Magnesiumcarbonat, Aluminiumhydroxid, Bentonit, Flugasche, Kiselguhr, Perlit und Glimmer. Bevorzugt werden schuppenförmige Füllstoffe wie z.B. Mica eingesetzt, allein oder in Kombination mit gewöhnlichen anorganischen Pigmenten wie Calciumcarbonat, Kaolin, Silica oder Talk. Bevorzugte Füllstoffe sind Kaolin, Kreide, Mikrodolomit, Quarzmehl und Glimmer.

Vorzugsweise werden 50 bis 700 oder 100 bis 550 Gewichtsteile anorganischer Füllstoff auf 100 Gewichtsteile Polymerdispersion eingesetzt, wobei vorzugsweise 30 bis 150 oder 40 bis 120 Gewichtsteile schuppenförmige Füllstoffe auf 100 Gewichtsteile Polymerdispersion eingesetzt werden.

Hilfsstoffe, die vorzugsweise zu mindestens 0,1 Gew.%, z.B. von 0,2 bis 5 Gew.% eingesetzt werden sind z.B. Verdickungsmittel, Harze, Weichmacher, organische und anorganische Pigmente, Cosolventien, Stabilisatoren, Benetzungsmittel, Konservierungsstoffe, Schauminhibitoren, Glas- oder Kunststoffperlen, Glas- oder Kunststoffhohlkörper, Gefrierschutzmittel, Dispergiermittel, Antioxidantien, UV-Absorber, Antistatika und Pigmentdispergatoren. Von den Hilfsstoffen können eines, zwei oder mehrere in Kombination eingesetzt werden. Geeignete Cosolventien sind z.B. Ethylenglykol, Ethylenglykolalkylether (z.B. Cellosolve®-Typen), Diethylenglykolalkylether (z.B. Carbitol®-Typen), Carbitolacetat, Butylcarbitolacetat oder deren Mischungen. Verdickungsmittel sind z.B. Polyvinylalkohole, Cellulosederivate oder Polyacrylsäuren in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid ode Zinksulfat. Bevorzugt werden die Hilfsstoffe zu mindestens 0,1 Gew.% eingesetzt und sind ausgewählt aus Verdickungsmitteln, Harzen, Weichmachern und Pigmentdispergatoren.

Die Güte einer Antidröhnmasse kann durch Messung der Biegeschwingungen im Resonanzkurvenverfahren nach ISO 6721-1 und ISO 6721-3 gemessen werden. Ein Maß für die schwingungsdämpfende Wirkung ist der Verlustfaktor tan delta. Das Maximum des Verlustfaktors tan delta liegt bei erfindungsgemäßen Antidröhnmassen vorzugsweise im Bereich von -20 bis +70°C. Im Falle der Verwendung von Kern-Schale-Partikeln oder von anderen Partikeln mit mehrphasiger Partikelstruktur, wobei die verschiedenen Polymerphasen unterschiedliche Glasübergangstemperaturen haben, gibt es in der Regel mindestens zwei Maxima des Verlustfaktors bei mindestens zwei verschiedenen Temperaturen. In diesem Fall liegen vorzugsweise alle Maxima des Verlustfaktors im Bereich von -20 bis +70 °C.

Gegenstand der Erfindung ist auch ein Verfahren zur Dämpfung von Vibrationen oder Schwingungen von Bauteilen von Fahrzeugen oder Maschinen, wobei

(1) eine oben näher beschriebene Antidröhnmasse zur Verfügung gestellt wird, und

(2) die Antidröhnmasse auf ein Bauteil eines Fahrzeuges oder einer Maschine aufgebracht und getrocknet wird.

Das Aufbringen kann auf übliche Art erfolgen, z.B. durch Streichen, Rollen oder Sprühen. Die aufgebrachte Menge ist vorzugsweise von 1 bis 7 $kg/m^2$ oder von 2 bis 6 $kg/m^2$ nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.

Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.

Die erfindungsgemäßen Antidröhnmassen haben gute anwendungstechnische Eigenschaften hinsichtlich guter Auftragbarkeit und guten schwingungsdämpfenden Eigenschaften und zeichnen sich durch ein geringes Wasseraufnahmevermögen auf.

Beispiele

Einsatzstoffe:

| | |
|---|---|
| Lodyne® 2010: | Perfluoralkyl-substituierte Carbonsäure |

| | |
|---|---|
| Lodyne® 2000: | Perfluoralkyl-substituierte Carbonsäure |
| Kappaphob® TAP 30: | Fluorcarbonpolymer-Emulsion |
| Ombrelub® 533: | Calciumstearat-Dispersion |
| Poligen® MW 1: | Montanester-Wachsdispersion (38-42%ig) |
| Basophob® WDS: | Paraffinwachs-Emulsion (ca. 60%ig) |
| Lurotex TX 2504: | Acrylat-Copolymer, fluoriert |
| Disponil® FES77 | Fettalkoholethersulfat, Natriumsalz (32-34%ige wässrige Lösung) |
| Dowfax® 2A1 | Alkyldiphenyloxiddisulfonat (45%ige wässrige Lösung) |
| Emulphor® NPS | 30-31 Gew.-%ige wässrige Lösung des Natriumsalzes des Schwefelsäure-halbesters von ethoxyliertem p-Nonylphenol mit 25 mol/mol Ethylenoxidein-heiten. |

Beispiel 1

In einem 2-Liter-Polymerisationsreaktor mit Ankerrührer und Heiz-/Kühleinrichtung wird ein Gemisch aus 180 g entionisiertem Wasser 3 g Acrylsäure und 3,12 g Ammoniak unter Stickstoffatmosphäre auf eine Temperatur von 90 °C erhitzt. Dann wird bei vorgenannter Temperatur eine Teilmenge von 41 g von Zulauf 1 und eine Teilmenge von 10,26 g einer 7%igen Na-Peroxodisulfatlösung zugegeben. Zulauf 1 ist eine Emulsion hergestellt aus:

| | |
|---|---|
| 195 g | entionisiertem Wasser |
| 18,75 g | Disponil® FES77 |
| 3,33 g | Dowfax® 2A1 |
| 3 g | tert.-Dodecylmercaptan |
| 346,2 g | n-Butylacrylat |
| 253,8 g | Styrol |

Zulauf 2 ist ein Initiatorzulauf
bestehend aus einer 47,14g Na-peroxodisulfatlösung mit einer 7%-igen Konzentration.

Der Emulsionszulauf wird über 4 h, der Initiatorzulauf über 4,5 h kontinuierlich zudosiert. Nach einer 30 minütigen Nachreaktionsphase wird mit einer 25%igen Natriumhydroxidlösung der pH über 30 Minuten eingestellt. Die chemische Desodorierung wird über 1 Stunde mit einer 10%-igen tert.-Butylhydroperoxidlösung und einer 12%-igen Natriumacetonbisulfitlösung durchgeführt.

Beispiel 2

Hergestellt wie Beispiel 1, aber mit variierter Monomerzusammensetzung.

Zulauf 1 ist eine Emulsion hergestellt aus:

| | |
|---|---|
| 195 g | entionisiertem Wasser |
| 18,75 g | Disponil® FES77 |
| 3,33 g | Dowfax® 2A1 |
| 3 g | tert.-Dodecylmercaptan |
| 345 g | n-Butylacrylat |
| 307,8 g | Methylmethacrylat |

Beispiel 3

Hergestellt wie Beispiel 1, aber mit variierter Monomerzusammensetzung g. Zulauf 1 ist eine Emulsion hergestellt aus

| | |
|---|---|
| 195 g | entionisiertem Wasser |
| 18,75 g | Disponil® FES77 |
| 3,33 g | Dowfax® 2A1 |
| 3 g | tert-Dodecylmercaptan |
| 245 g | Methylmethacrylat |
| 292,2 g | Ethylhexylacrylat |

Beispiel 4

Hergestellt wie Beispiel 1, aber mit variierter Monomerzusammensetzung. Zulauf 1 ist eine Emulsion hergestellt aus

| | |
|---|---|
| 195 g | entionisiertem Wasser |
| 18,75 g | Disponil® FES77 |
| 3,33 g | Dowfax® 2A1 |
| 3 g | tert.-Dodecylmercaptan |
| 294 g | Ethylhexylacrylat |
| 306 g | Styrol |

Es werden Antidröhnmassen hergestellt aus
24 g Wasser
37,2 g Polymerdispersion (50% Feststoffgehalt), gemäß o.g. Beispielen 1 bis 4 Hydrophobierungsmittel (siehe Tabelle 1)
38,6 g Muskovitglimmer GHL 144
77,2 g Omyacarb® 20 BG (Kreide)

Von den Antidröhnmassen mit Bindemittel gemäß Beispiel 1 wurden Filme hergestellt und von den Filmen wurde die Wasseraufnahme nach folgender Methode gemessen.
Probenabmessung: 20 x 15 mm
Anzahl der Prüfkörper: 3

Ein Tag nach Herstellung der Antidröhnmassen werden jeweils 2 mm starke Filme auf einer mit Teflon beschichteten Glasplatte aufgezogen. Nach einem Tag Trocknung bei Raumtemperatur (20°C) werden die Filme bei 140°C 15 Minuten gelagert. Aus den abgekühlten Filmen werden Prüfkörper ausgestanzt. Die gewogenen Prüflinge kommen nun in mit Trinkwasser gefüllte Polyethylenbecher. Die Prüfkörper werden nach 24 Stunden aus dem Wasser herausgenommen, zwischen ein Handtuch gelegt kurz mit einem 100 g Gewicht belastet und ausgewogen. Die Prüfkörper werden in den Becher zurückgegeben, für eine Woche gelagert und anschließend erneut wie oben beschrieben ausgewogen.

Die Wasseraufnahme berechnet sich wie folgt:

Wasseraufnahme [24 h] = (m1 - m0) / m0 * 100%
Wasseraufnahme [1 Woche] = (m2 - m0) / m0 * 100%
m0 : Masse des Prüfkörpers vor Lagerung in Wasser
m1 : Masse des Prüfkörpers nach 24 h Wasserlagerung
m2 : Masse des Prüfkörpers nach 1 Woche Wasserlagerung

Die Ergebnisse sind in Tabelle 1 aufgeführt.

Tabelle 1: Ergebnisse der Messung der Wasseraufnahme

| Beispiel | Hydrophobierungs-mittel (0,5%) | Wasseraufnahme 24 h | Wasseraufnahme 1 Woche |
|---|---|---|---|
| B1 | Lodyne® 2010 | 7% | 12% |
| B2 | Lodyne® 2000 | 9 % | 13% |
| B3 | Lurotex® TX 2504 | 11 % | 15% |
| B4 | Kappaphob® TAP 30 | 12% | 17% |
| B5 | Poligen® MW 1 | 15% | 20% |

(fortgesetzt)

| Beispiel | Hydrophobierungs-mittel (0,5%) | Wasseraufnahme 24 h | Wasseraufnahme 1 Woche |
|---|---|---|---|
| B6 | Basophob® WDS | 20% | 26% |
| B7 | Ombrelub® 533 | 41 % | 45% |

Die Ergebnisse zeigen, dass eine besonders geringe Wasseraufnahme mit den Beispielen B1 und B2 erreicht wird.

Beispiel B8 (Hydrophobierungsmittel im Emulsionszulauf)

In einem 2-Liter-Polymerisationsreaktor mit Ankerrührer und Heiz-/Kühleinrichtung wird ein Gemisch aus 180 g entionisiertem Wasser 3 g Acrylsäure und 3,36 g Ammoniak unter Stickstoffatmosphäre auf eine Temperatur von 85 °C erhitzt Dann wird bei vorgenannter Temperatur eine Teilmenge von 41,54 g von Zulauf 1 und eine Teilmenge von 48 g einer 2%igen Na-peroxodisulfatlösung zugegeben. Zulauf 1 ist eine Emulsion hergestellt aus

| | |
|---|---|
| 155 g | entionisiertem Wasser |
| 14,52 g | Emulphor® NPS |
| 63,16 g | Lodyne® 2010 |
| 1,2 g | tert.-Dodecylmercaptan |
| 345 g | n-Butylacrylat |
| 246 g | Methylmethacrylat |

Zulauf 2 ist ein Initiatorzulauf
bestehend aus 48 g Na-Peroxodisulfatlösung mit einer 2%-igen Konzentration.

Der Emulsionszulauf sowie der Initiatorzulauf werden über 3,5 h kontinuierlich zudosiert. Nach einer 30 minütigen Nachreaktionsphase wird das Produkt auf 65°C gekühlt. Die chemische Desodorierung wird über 1 Stunde mit einer 10%-igen tert. Butylhydroperoxidlösung und einer 10%-igen Ascorbinsäurelösung durchgeführt. Anschließend wird mit einer 5% Natriumhydroxidlösung der pH über 5 Minuten eingestellt.

Beispiel B9:

Hergestellt wie Beispiel B8, aber mit variiertem Hydrophobierungsmittel.

Zulauf 1 ist eine Emulsion hergestellt aus

| | |
|---|---|
| 183,88 g | entionisiertem Wasser |
| 14,52 g | Emulphor® NPS |
| 34,29 g | NH4-Stearat |
| 1,2 g | tert.-Dodecylmercaptan |
| 345 g | n-Butylacrylat |
| 246 g | Methylmethacrylat |

Beispiel B10
Hergestellt wie Beispiel B8, aber mit variiertem Hydrophobierungsmittel.
Zulauf 1 ist eine Emulsion hergestellt aus

| | |
|---|---|
| 183,88 g | entionisiertem Wasser |
| 14,52 g | Emulphor NPS |
| 25,71 g | NH4-Stearat |
| 1,2 g | tert.-Dodecylmercaptan |
| 345 g | n-Butylacrylat |
| 246 g | Methylmethacrylat |

Es werden Antidröhnmassen hergestellt wie oben beschrieben aber ohne Zusatz von zusätzlichem Hydrophobierungsmittel. Von aus den Antidröhnmassen hergestellten Filmen wurde die Wasseraufnahme wie oben beschreiben gemessen. Die Ergebnisse sind in Tabelle 2 aufgeführt.

Tabelle 2: Ergebnisse der Messung der Wasseraufnahme

| Beispiel | Hydrophobierungs-mittel (0,5%) | Wasseraufnahme 24 h | Wasseraufnahme 1 Woche |
|---|---|---|---|
| B8 | Lodyne® 2010 | 9 % | 12 % |
| B9 | NH4-Stearat | 12 % | 24 % |
| B10 | NH4-Stearat | 15 % | 26 % |

Die Ergebnisse zeigen, dass eine besonders geringe Wasseraufnahme mit dem Beispiel B8 erreicht wird.

**Patentansprüche**

1. Antidröhnmasse, enthaltend

   (a) eine Polymerdispersion, enthaltend mindestens ein durch Emulsionspolymerisation von radikalisch polymerisierbaren Monomeren erhältliches, in Wasser dispergiertes Polymer mit einer Glasübergangstemperatur im Bereich von -60 bis +60°C;
   (b) anorganische Füllstoffe; und
   (c) mindestens eine fluorierte Verbindung, die ausgewählt ist aus der Gruppe, die aus perfluoralkyl-substituierten Carbonsäuren und deren Salzen, perfluoralkyl-substituierte Carbonsäureharze oder deren Salze, oberflächenaktiven, fluoraliphatischen polymeren Estern, und fluorhaltigen Copolymeren auf Acrylatbasis besteht.

2. Antidröhnmasse gemäß dem vorhergehenden Anspruch, **dadurch gekennzeichnet, dass** die fluorierte Verbindung ausgewählt ist aus der Gruppe bestehend aus perfluoralkyl-substituierten Carbonsäuren und Salzen davon.

3. Antidröhnmasse gemäß einem der vorhergehenden Ansprüche, **dadurch gekennzeichnet, dass** die perfluoralkyl-substituierte Carbonsäure und deren Salze mindestens eine oder zwei Perfluoralkylgruppen der Formel $-C_nCF_{2n+1}$ aufweisen, wobei die Perfluoralkylgruppen linear oder verzweigt sind, n eine Zahl von 1 bis 16 bedeutet und die Salze ausgewählt sind aus Ammoniumsalzen, Alkalimetallsalzen und Erdalkalimetallsalzen.

4. Antidröhnmasse gemäß einem der vorhergehenden Ansprüche, **dadurch gekennzeichnet, dass** das Polymer( a) ausgewählt ist aus Acrylat-Homopolymeren, Acrylat-Copolymeren und Acrylat-Polymer-Blends.

5. Antidröhnmasse gemäß einem der vorhergehenden Ansprüche, **dadurch gekennzeichnet, dass** die fluorierte Verbindung in einer Menge von 0,1 bis 3 Gew.-% enthalten ist.

6. Antidröhnmasse gemäß einem der vorhergehenden Ansprüche, **dadurch gekennzeichnet, dass** die Glasübergangstemperatur des durch Emulsionspolymerisation hergestellten Polymers im Bereich von -30 °C bis kleiner oder gleich +60 °C liegt.

7. Antidröhnmasse gemäß einem der vorhergehenden Ansprüche, **dadurch gekennzeichnet, dass** das durch Emulsionspolymerisation hergestellte Polymer zu mindestens 60 Gew.-% aufgebaut ist aus Hauptmonomeren, welche ausgewählt sind aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

8. Antidröhnmasse gemäß einem der vorhergehenden Ansprüche, **dadurch gekennzeichnet, dass** das Polymer zu mindestens 60 Gew. % aus $C_1$ bis $C_{10}$ Alkyl(meth)acrylaten aufgebaut ist.

9. Antidröhnmasse gemäß einem der vorhergehenden Ansprüche, **dadurch gekennzeichnet, dass** das Polymer eine Kern-Schale Morphologie aufweist oder durch mindestens zweistufige Polymerisation herstellbar ist, wobei die Glasübergangstemperatur des den Kern bildenden Polymers um mindestens 10°C verschieden ist von der Glasübergangstemperatur des die Schale bildenden Polymers, bzw. wobei die Glasübergangstemperatur des bei der ersten Polymerisationsstufe entstehenden Polymers von der Glasübergangstemperatur des bei der zweiten Polymerisationsstufe entstehenden Polymers um mindestens 10°C verschieden ist.

**10.** Antidröhnmasse gemäß einem der vorhergehenden Ansprüche, enthaltend

(a) 5 bis 20 Gew.% Feststoff der Polymerdispersion,
(b) 40 bis 90 Gew.% anorganische Füllstoffe,
(c) 0,1 bis 3 Gew.% fluorierte Verbindungen,
(c) 10 bis 40 Gew.% Wasser und
(d) 0 bis 10 Gew.% Hilfsstoffe.

**11.** Antidröhnmasse gemäß einem der vorhergehenden Ansprüche, **dadurch gekennzeichnet, dass** die anorganischen Füllstoffe ausgewählt sind aus Kaolin, Kreide, Mikrodolomit, Quarzmehl und Glimmer und die Hilfsstoffe zu mindestens 0,1 Gew.% eingesetzt werden und ausgewählt sind aus Verdickungsmitteln, Harzen, Weichmachern und Pigmentdispergatoren.

**12.** Verwendung einer Antidröhnmasse gemäß einem der vorherigen Ansprüche zur Schwingungsdämpfung von Karosserieteilen eines Fahrzeugs.

**13.** Verfahren zur Dämpfung von Vibrationen oder Schwingungen von Bauteilen von Fahrzeugen oder Maschinen, wobei

(1) eine Antidröhnmasse gemäß einem der Ansprüche 1 bis 11 zur Verfügung gestellt wird, und
(2) die Antidröhnmasse auf ein Bauteil eines Fahrzeuges oder einer Maschine aufgebracht und getrocknet wird.

**Claims**

**1.** A sound deadener composition comprising

(a) a polymer dispersion comprising at least one water-dispersed polymer obtainable by emulsion polymerization of free-radically polymerizable monomers and having a glass transition temperature in the range from -60 to +60°C;
(b) inorganic fillers; and
(c) at least one fluorinated compound selected from the group consisting of perfluoroalkyl-substituted carboxylic acids and their salts, perfluoroalkyl-substituted carboxylic acid resins or their salts, surface-active, fluoroaliphatic polymeric esters, and fluorine-containing, acrylate-based copolymers.

**2.** The sound deadener composition according to the preceding claim, wherein the fluorinated compound is selected from the group consisting of perfluoroalkyl-substituted carboxylic acids and salts thereof.

**3.** The sound deadener composition according to either of the preceding claims, wherein the perfluoroalkyl-substituted carboxylic acid and salts thereof have at least one or two perfluoroalkyl groups of the formula $-C_nCF_{2n+1}$, where the perfluoroalkyl groups are linear or branched, n is a number from 1 to 16, and the salts are selected from ammonium salts, alkali metal salts, and alkaline earth metal salts.

**4.** The sound deadener composition according to any of the preceding claims, wherein the polymer (a) is selected from acrylate homopolymers, acrylate copolymers, and acrylate polymer blends.

**5.** The sound deadener composition according to any of the preceding claims, wherein the fluorinated compound is present in an amount of 0.1% to 3% by weight.

**6.** The sound deadener composition according to any of the preceding claims, wherein the glass transition temperature of the polymer prepared by emulsion polymerization is in the range from -30°C to less than or equal to +60°C.

**7.** The sound deadener composition according to any of the preceding claims, wherein the polymer prepared by emulsion polymerization is composed of at least 60% by weight of principal monomers selected from C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

**8.** The sound deadener composition according to any of the preceding claims, wherein the polymer is composed of at

least 60% by weight of $C_1$ to $C_{10}$ alkyl (meth) acrylates.

**9.** The sound deadener composition according to any of the preceding claims, wherein the polymer has a core-shell morphology or is preparable by at least two-stage polymerization, the glass transition temperature of the core-forming polymer being different by at least 10°C than the glass transition temperature of the shell-forming polymer, or the glass transition temperature of the polymer formed in the first polymerization stage being different by at least 10°C than the glass transition temperature of the polymer formed in the second polymerization stage.

**10.** The sound deadener composition according to any of the preceding claims, comprising

(a) 5% to 20% by weight of solids of the polymer dispersion,
(b) 40% to 90% by weight of inorganic fillers,
(c) 0.1% to 3% by weight of fluorinated compounds,
(d) 10% to 40% by weight of water, and
(e) 0% to 10% by weight of auxiliaries.

**11.** The sound deadener composition according to any one of the preceding claims, wherein the inorganic fillers are selected from kaolin, chalk, microdolomite, finely ground quartz, and mica, and the auxiliaries are used at not less than 0.1% by weight and are selected from thickeners, resins, plasticizers, and pigment dispersants.

**12.** The use of a sound deadener composition according to any of the preceding claims for vibration damping of vehicle bodywork parts.

**13.** A method for damping oscillations or vibrations of vehicle or machine components, where

(1) a sound deadener composition according to any of claims 1 to 11 is provided, and
(2) the sound deadener composition is applied to a vehicle or machine component and dried.

## Revendications

**1.** Masse anti-grincement, contenant

(a) une dispersion polymère, contenant au moins un polymère dispersé dans l'eau, pouvant être obtenu par polymérisation en émulsion de monomères polymérisables par voie radicalaire, présentant une température de transition vitreuse dans la plage de -60 à +60°C ;
(b) des charges inorganiques ; et
(c) au moins un composé fluoré, qui est choisi dans le groupe constitué par les acides carboxyliques substitués par perfluoroalkyle et leurs sels, les résines d'acide carboxylique substituées par perfluoroalkyle ou leurs sels, les esters polymères tensioactifs, fluoroaliphatiques et les copolymères fluorés à base d'acrylate.

**2.** Masse anti-grincement selon la revendication précédente, **caractérisée en ce que** le composé fluoré est choisi dans le groupe constitué par les acides carboxyliques substitués par perfluoroalkyle et leurs sels.

**3.** Masse anti-grincement selon l'une quelconque des revendications précédentes, **caractérisée en ce que** l'acide carboxylique substitué par perfluoroalkyle et ses sels présente au moins un ou deux groupes perfluoroalkyle de formule $-C_nCF_{2n+1}$, les groupes perfluoroalkyle étant linéaires ou ramifiés, n signifiant un nombre de 1 à 16 et les sels étant choisis parmi les sels d'ammonium, les sels de métal alcalin et les sels de métal alcalino-terreux.

**4.** Masse anti-grincement selon l'une quelconque des revendications précédentes, **caractérisée en ce que** le polymère (a) est choisi parmi les homopolymères d'acrylate, les copolymères d'acrylate et les mélanges d'acrylate-polymère.

**5.** Masse anti-grincement selon l'une quelconque des revendications précédentes, **caractérisée en ce que** le composé fluoré est contenu en une quantité de 0,1 à 3% en poids.

**6.** Masse anti-grincement selon l'une quelconque des revendications précédentes, **caractérisée en ce que** la température de transition vitreuse du polymère préparé par polymérisation en émulsion se situe dans la plage de -30°C à moins de ou à +60°C.

7. Masse anti-grincement selon l'une quelconque des revendications précédentes, **caractérisée en ce que** le polymère préparé par polymérisation en émulsion est constitué à raison d'au moins 60% en poids de monomères principaux qui sont choisis parmi les (méth)acrylates de $C_1$-$C_{20}$-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères.

8. Masse anti-grincement selon l'une quelconque des revendications précédentes, **caractérisée en ce que** le polymère est constitué à raison d'au moins 60% en poids par des (méth) acrylates d'alkyle en $C_1$ à $C_{10}$.

9. Masse anti-grincement selon l'une quelconque des revendications précédentes, **caractérisée en ce que** le polymère présente une morphologie à noyau-coquille ou peut être préparé par une polymérisation au moins en deux étapes, la température de transition vitreuse du polymère formant le noyau étant différente d'au moins 10°C de la température de transition vitreuse du polymère formant la coquille ou la température de transition vitreuse du polymère formé lors de la première étape de polymérisation étant différente d'au moins 10°C de la température de transition vitreuse du polymère formé lors de la deuxième étape de polymérisation.

10. Masse anti-grincement selon l'une quelconque des revendications précédentes, contenant

(a) 5 à 20% en poids de solides de la dispersion de polymère,
(b) 40 à 90% en poids de charges inorganiques,
(c) 0,1 à 3% en poids de composés fluorés,
(d) 10 à 40% en poids d'eau et
(e) 0 à 10% en poids d'adjuvants.

11. Masse anti-grincement selon l'une quelconque des revendications précédentes, **caractérisée en ce que** les charges inorganiques sont choisies parmi le kaolin, la craie, la microdolomite, la farine de quartz et le mica et les adjuvants sont utilisés à raison d'au moins 0,1% en poids et sont choisis parmi les épaississants, les résines, les plastifiants et les dispersants de pigments.

12. Utilisation d'une masse anti-grincement selon l'une quelconque des revendications précédentes pour l'amortissement des vibrations de pièces de carrosserie d'un véhicule.

13. Procédé pour amortir les vibrations ou les oscillations de pièces de véhicules ou de machines,

(1) une masse anti-grincement selon l'une quelconque des revendications 1 à 11 étant mise à disposition et
(2) la masse anti-grincement étant appliquée sur une pièce d'un véhicule ou d'une machine et séchée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20040033354 A
- DE 202010001353 U1
- US 6502821 B
- EP 1520865 A
- WO 2007034933 A
- EP 81083 A
- DE 19954619


### In der Beschreibung aufgeführte Nicht-Patentliteratur


- *Journal of Materials Science,* 2001, vol. 36, 5733-5737
- **W. MÄCHTLE.** *Makromolekulare Chemie,* 1984, vol. 185, 1025-1039
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- **T.G. FOX.** *Bull. Am. Phys. Soc. (Ser. II,* 1956, vol. 1, 123
- Ullmann’s Enzyklopädie der technischen Chemie. 1980, 17, 18
- Ullmann’s Encyclopedia of Industrial Chemistry. VCH, 1992, vol. A 21, 169
- **J. BRANDRUP ; E.H. IMMERGUT.** Polymer Handbook. J. Wiley, 1989